# Europäisches Patentamt
## European Patent Office
## Office européen des brevets

(11) Publication number: **0 088 530**
**B1**

(12) # EUROPEAN PATENT SPECIFICATION

(45) Date of publication of patent specification: **10.12.86**

(51) Int. Cl.⁴: **A 23 L 1/31, A 23 L 1/325**

(21) Application number: **83300764.4**

(22) Date of filing: **14.02.83**

(54) Comminuted meat and/or fish product.

(30) Priority: **04.03.82 GB 8206444**

(43) Date of publication of application:
**14.09.83 Bulletin 83/37**

(45) Publication of the grant of the patent:
**10.12.86 Bulletin 86/50**

(84) Designated Contracting States:
**BE DE FR GB NL**

(56) References cited:
**EP-A-0 029 503
DE-A-2 856 821
GB-A-1 370 892
GB-A-1 444 072
GB-A-1 451 020
US-A-2 503 282**

**Letters from NCIB and from ATCC**

(73) Proprietor: **IMPERIAL CHEMICAL INDUSTRIES PLC**
**Imperial Chemical House Millbank**
**London SW1P 3JF (GB)**

(72) Inventor: **Senior, Peter James**
**Foulis Cottage Ingleby Greenhow**
**Middlesbrough Cleveland (GB)**
Inventor: **McNairney, James**
**14 Redwing Lane Crooksbarn**
**Norton Stockton-on-Tees Cleveland (GB)**

(74) Representative: **Aufflick, James Neil et al**
**Imperial Chemical Industries PLC Legal**
**Department: Patents PO Box 6 Bessemer Road**
**Welwyn Garden City Herts, AL7 1HD (GB)**

Courier Press, Leamington Spa, England.

## Description

This invention relates to a comminuted meat and/or fish product containing bacterial single cell protein (SCP) and in particular to a sausage, burger, pie filling, luncheon meat or like product.

In certain types of sausages such as those often referred to as "catering grade" sausages components having a functional enhancement role are included in order to upgrade the nutritional quality of sausages and to prevent fat and water losses, spitting in the pan, shrinkage and explosion when they are cooked. Functional and nutritional enhancers which are used in such sausages at the present time include casein and certain derivatives of soya bean meal. Such presently used functional enhancers have some disadvantages as regards price and taste.

According to the present invention we provide a comminuted meat and/or fish product which contains meat and/or fish and other conventional ingredients and from 0.5 to 15% by weight of bacterial single cell protein (SCP) wherein the SCP is included in the product in the form of a powder having an average particle size within the range 40 μ to 500 μ.

Further according to the invention we provide a comminuted meat and/or fish product which contains meat and/or fish and other conventional ingredients and from 0.5 to 15% by weight of bacterial single cell protein (SCP) wherein a vegetable oil is added to the SCP before the SCP is included in the product.

The comminuted meat products of the invention may be of any type of such products including burgers, luncheon meats, pie fillings, pátes, pastes, fish pastes, emulsified meat products and in particular sausages. These products comprise meat and/or fish, rusk, seasoning and, in some instances functional and nutritional enhancers such as casein or soya derivatives, together with bacterial SCP. In the meat products of the invention the SCP may be included for use either as a functional enhancer or as a nutritious ('meat/fish') component or for a combination of both purposes. When included in the product for its functional enhancement role in products such as "catering grade" sausages which require such a component, the SCP is preferably included in an amount from 0.5 to 2% by weight replacing all or part of the conventional functional enhancers such as casein and/or soya derivatives which are included. When included as a nutritious component in for example higher quality sausages SCP is preferably included in an amount from 2 to 15% replacing a corresponding amount of meat and/or fish in the product.

The SCP may be produced by any suitable method for example by growing bacteria on media containing hydrocarbons, alcohols or any other suitable carbon sources. Very suitably the SCP is obtained by growing appropriate bacteria upon media containing methanol as a carbon source. Preferred bacteria grown upon methanol are strains of the species Methylophilus methylotrophus (formerly named Pseudomonas methylotropha), the characteristics of which are described in our UK Specification No. 1370892 and cultures of which are deposited at the following culture collections:—

National Collection of Industrial Bacteria (NCIB), Torrey Research Station, Aberdeen, Scotland, UK—Strains NCIB 10508 to 10515 and 10592 to 10596 all inclusive;

US Department of Agriculture Collection (NRRL), Peoria, Illinois, USA—Strains NRRL B-5352 to B-5364 inclusive;

Fermentation Research Institute (FRI), Japan—Strains FERM P-1215 to 1227 inclusive.

Also preferred is the genetically modified strain of Methylophilus methylotrophus disclosed in our published European Patent Application No. 35831 and deposited at NCIB as strain NCIB 11585. Other methanol-utilizing strains of bacteria which may form the sources of the SCP used in the products of the invention include the following which are deposited as follows and are referred to in the publications stated:—

Methylomonas clara
  UK Specification 1526599 and US Patent 4166004
  ATCC 31226

Pseudomonas methylonica
  UK Specification 1451020 and Japanese Patent Publication 82/19954
  FRI 2247 (Nov. sp) and 2248 (Nov. sp)

Pseudomonas methanolica
  UK Specification 1352728 and US Patent 3755082
  ATCC 21704

Pseudomonas sp.
  UK Specification 1326582
  ATCC 21438 and 21439

Methylomonas methanolica
  UK Specification 1420264 and US Patent 3994781
  NRRL B-5458

Pseudomonas utilis
  UK Specification 1444072, US Patent 3901762 and Japanese Patent Publication 82/14833
  FRI 1690 and 1691

Pseudomonas inaudita
  UK Specification 1444072, US Patent 3901762 and Japanese Patent Publication 82/14833
  FRI 1693 and 1694.

NB: ATCC is the American Type Culture Collection.

When SCP is included in the products in larger amounts, i.e. 2 to 15%, as a nutritious component it is desirable that its nucleic acid content should be reduced. This can be done for example by the process of our UK Specification 1498688 or by the acid hydrolysis of "drier feed cream". At the lower inclusion levels of 0.5 to 2% employed when SCP is included as a functional enhancer, the reduction of its nucleic acid content is not necessary on nutritional grounds.

Advantages of SCP as a component of comminuted meat products are as follows and are unexpected because the physical properties of SCP would not lead a food technologist to expect that it would have a useful functional enhancement role in such products:—

1. There is an improved taste believed to be brought about by an unexpected taste development between SCP and other components of the food during processing to the cooked products;

2. There is a textural benefit, improved mouthfeel and positive resistivity in the raw which imparts to a "catering-grade" sausage properties such as a degree of resistance to the cutting action of the teeth which are usually associated with much superior grades of sausages.

The invention is illustrated by the following Example.

Example

Two batches of pork sausages A and B were made up having the following ingredient formulation:—

Pork head meat 70 vl.—35%·
Water—26%
Rusk—12%
Pork rind—10%
Beef fat—10%
Starch—2.5%
Seasoning—2.5%
Protein additive—2.0%

In the batch A sausages the protein additive was SCP comprising dried cells of *Methylophilus methylotrophus* strain NCIB 10515. In the batch B sausages the protein additive was a conventional proteinaceous function enhancer.

The two batches of sausages were made up using the following method:—

Equipment:
Alpina 80L bowl chopper fitted with 6 blade knife assembly;

Addition sequence:
1. ½ Water and protein additive and starch. Slow speed, 1K:1B (ratio of knife speed to bowl rotation).
Time 0.5 min.
2. Slow speed 2K:1B add lean meat (incl. pork rind) and chop in, then change to high speed and add remainder of water.
Total time 2 min.
3. High speed 2K:1B.
Add beef fat and chop in.
Time 0.5 min.
4. High speed 2K:1B.
Add rusk.
Time 0.5 min.

Total process time—3.5 min.
5. Fill into collagen casings.

Samples of the two batches of sausages A and B were cooked in separate pans for equal periods of time. The sausages were then cut into sections and placed upon plates. The cooked products were then subjected to a range of conventional taste panel evaluations for taste, texture and colour. SCP and derived products imparted a concentration dependent enhancement of flavour and in general SCP containing products were preferred to conventional foodstuffs. In one evaluation a group of 14 persons selected at random were asked to taste the sausages and to state a preference for those of batch A or those of batch B based upon their overall impressions of taste and other qualities. Of the 14 persons 9 stated a preference for the batch A sausages containing SCP as the protein additive.

## Claims

1. A comminuted meat and/or fish product which contains meat and/or fish and other conventional ingredients and from 0.5 to 15% by weight of bacterial single cell protein (SCP) wherein the SCP is included in the product in the form of a powder having an average particle size within the range 40 μ to 500 μ.

2. A comminuted meat and/or fish product which contains meat and/or fish and other conventional ingredients and from 0.5 to 15% by weight of bacterial single cell protein (SCP) wherein a vegetable oil is added to the SCP before the SCP is included in the product.

3. A comminuted meat and/or fish product according to claim 1 or claim 2 which is in the form of a burger, luncheon meat, pie filling, páte, paste, fish paste or sausage.

4. A comminuted meat and/or fish product according to any one of the preceding claims wherein the SCP is included as a functional enhancer in an amount from 0.5 to 2% by weight.

5. A comminuted meat and/or fish product according to any one of claims 1 to 3 wherein the SCP is included as a nutritious component in an amount from 2 to 15% by weight.

6. A comminuted meat and/or fish product according to any one of the preceding claims wherein the SCP is produced by growing bacteria on a medium containing a hydrocarbon or an alcohol as a carbon source.

7. A comminuted meat and/or fish product according to claim 6 wherein the SCP is produced by growing bacteria upon a medium containing methanol as a carbon source.

8. A comminuted meat and/or fish product according to any one of the preceding claims wherein the SCP is derived from any one of the *Methylophilus methylotrophus* strains NCIB 10508 to 10515, NCIB 10592 to 10596 or NCIB 11585.

**Patentansprüche**

1. Zerkleinertes Fleisch- und/oder Fischprodukt, das Fleisch und/oder Fisch und andere übliche Bestandteile und 0,5 bis 15 Masse% bakterielles Einzellerprotein (EZP) enthält, wobei das EZP in Form eines Pulvers mit einer mittleren Teilchengröße von 40 µm bis 500 µm in das Produkt einbezogen wird.

2. Zerkleinertes Fleisch- und/oder Fischprodukt, das Fleisch und/oder Fisch und andere übliche Bestandteile und 0,5 bis 15 Masse% bakterielles Einzellerprotein (EZP) enthält, wobei zu dem EZP ein Pflanzenöl hinzugegeben wird, bevor das EZP in das Produkt einbezogen wird.

3. Zerkleinertes Fleisch- und/oder Fischprodukt nach Anspruch 1 oder Anspruch 2 in Form einer Frikadelle, von Frühstücksfleisch, einer Pastetenfüllung, einer Pastete, einer Paste, einer Fischpaste oder einer Wurst.

4. Zerkleinertes Fleisch- und/oder Fischprodukt nach einem der vorhergehenden Ansprüche, in dem das EZP als Mittel zur Funktionsverbesserung in einer Menge von 0,5 bis 2 Masse% enthalten ist.

5. Zerkleinertes Fleisch- und/oder Fischprodukt nach einem der Ansprüche 1 bis 3, in dem das EZP als Nährbestandteil in einer Menge von 2 bis 15 Masse% enthalten ist.

6. Zerkleinertes Fleisch- und/oder Fischprodukt nach einem der vorhergehenden Ansprüche, bei dem das EZP durch Züchten von Bakterien auf einem Nährmedium, das als Kohlenstoffquelle einen Kohlenwasserstoff oder einen Alkohol enthält, erzeugt wird.

7. Zerkleinertes Fleisch- und/oder Fischprodukt nach Anspruch 6, bei dem das EZP durch Züchten von Bakterien auf einem Nährmedium, das als Kohlenstoffquelle Methanol enthält, erzeugt wird.

8. Zerkleinertes Fleisch- und/oder Fischprodukt nach einem der vorhergehenden Ansprüche, bei dem das EZP aus irgendeinem der *Methylophilus methylotrophus*-Stämme NCIB 10508 bis 10515, NCIB 10592 bis 10596 oder NCIB 11585 erhalten wird.

**Revendications**

1. Produit de viande et/ou de poisson haché, qui contient de la viande et/ou du poisson et d'autres ingrédientes classiques et de 0,5 à 15% en poids d'une protéine de bactérie unicellulaire (PUC), dans lequel la PUC est incluse dans le produit sous la forme d'une poudre ayant une dimension moyenne de particules comprise dans la plage de 40 µm à 500 µm.

2. Produit de viande et/ou de poisson haché qui contient de la viande et/ou du poisson et d'autres ingrédients classiques et de 0,5 à 15% en poids d'une protéine de bactérie unicellulaire (PUC), dans lequel une huile végétale est ajoutée à la PUC avant l'inclusion de celle-ci dans le produit.

3. Produit de viande et/ou de poisson haché selon la revendication 1 ou la revendication 2, qui se présente sous la forme d'un hamburger, de l'uncheon-meat, de garniture de pâtés, de pâté, de pâté, de pâte de poisson ou de saucisse.

4. Produit de viande et/ou de poisson haché selon l'une quelconque des revendications précédentes, dans lequel la PUC est incluse comme adjuvant fonctionnel en quantité de 0,5 à 2% en poids.

5. Produit de viande et/ou de poisson haché selon l'une quelconque des revendications 1 à 3, dans lequel la PUC est incluse comme composant nutritif en quantité de 2 à 15% en poids.

6. Produit de viande et/ou de poisson haché selon l'une quelconque des revendications précédentes, dans lequel la PUC est produite par développement de bactéries sur un milieu contenant un hydrocarbure ou un alcool comme source de carbone.

7. Produit de viande et/ou de poisson haché selon la revendication 6, dans lequel la PUC est produite par développement de bactéries sur un milieu contenant du méthanol comme source de carbone.

8. Produit de viande et/ou de poisson haché selon l'une quelconque des revendications précédentes, dans lequel la PUC est dérivée de l'une quelconque des souches *Methylophilus methylotrophus* NCIB 10508 à 10515, NCIB 10592 à 10596 ou NCIB 11585.